# EUROPEAN PATENT SPECIFICATION

(11) **EP 1 887 515 B1**
(45) Date of publication and mention of the grant of the patent: **28.12.2011**
(21) Application number: 07103154.6
(22) Date of filing: 27.02.2007
(51) Int. Cl.: G06T 3/40

(54) **Colour binning of a digital image**
Farb-Binning eines digitalen Bildes
Groupement de couleurs d'une image numérique

(43) Date of publication of application: 13.02.2008
(73) Proprietor: Phase One A/S, 2000 Frederiksberg (DK)
(72) Inventor: Andersen, Thomas, 4600, Køge (DK)
(74) Representative: Plougmann & Vingtoft A/S

(56) References cited:
- US-A1- 2005 002 589
- US-B1- 6 714 242
- US-B1- 6 724 932

## Description

### FILD OF THE INVENTION

The invention relates to image processing and in particular colour binning of colour pixels of a digital image.

### BACKGROUND OF THE INVENTION

The technology of CCD image sensors constantly improves leading to increasing image sensor resolutions. Today, high performance cameras are equipped with 10-20 Mega pixel resolution sensors or even higher resolutions. Low performance cameras in mobile phones use 3 mega pixel sensors or even higher resolutions. Future high and low performance cameras will most likely follow the trend of using image sensors with even higher pixel resolutions.

The increasing pixel resolution provides increasing amounts of image data to be processed and transferred from one device to another, for example from the mobile phone to a computer or the Internet. Accordingly, data processors and electronic memory must meet higher speed and capacity requirements in order to handle the increasing amounts of image data.

Cameras may be used both for still picture recording and video recording. Video recording typically requires lower pixel resolution than the nominal sensor resolution in order to meet requirements of readout speed and memory capacity for video images. Accordingly, the resolution of the image sensor needs to be downscaled for video recording.

Another problem related to the increasing pixel resolutions of image sensors is related to the sensor's sensitivity to light and the dynamic range of sensor. In order to increase the image sensor's sensitivity to light, for example under low light level conditions, the pixel resolution of the image sensor may beneficially be reduced by binning together a number of pixels. By binning together a number of pixels the light receiving area of one pixel increases and consequently, also the light sensitivity of the sensor increases.

The amount of image data generated by an image sensor can be reduced by reading out only a fraction of pixels from the image sensor, for example by reading out only every second or third pixel and skipping the rest. However such method results in poor image quality.

Accordingly it may be seen as a problem to reduce the amount of image data without reducing the image quality significantly.

US 2006/0203113 discloses a method for downsizing pixel information by pixel binning. An example describes that four (2x2) pixels are skipped and added and an amount of pixel information is compressed at a ratio of 1/4. First, all pieces of pixel information of a same colour filter in first and third columns of a first row and the first and the third column of a third row, all pieces of pixel information of G in this example, are added and outputted as information for one pixel. Next, all pieces of pixel information of a same colour filter in second and fourth columns of the first row and the second and the fourth columns of the third row, all pieces of pixel information of B in this example, are added and outputted as information for one pixel. Then, all pieces of pixel information in fifth and seventh columns of the first row and the fifth and the seventh columns of the third row, all pieces of pixel information of G in this example, are added and outputted as information for one pixel. When the same operation is repeated and pixels to be read out reach a last column or a column near the last column, then all pieces of pixel information of a same colour filter in the first and the third columns of a second row and the first and the third columns of a fourth row, all pieces of pixel information of R in this example, are added and outputted as information for one pixel.

US2005002589 discloses a camera with an image sensor for capturing an image in a Bayer image space and a processor for converting the captured image to an output space. Coordinates of the input space are mapped to the coordinates of the output space by dividing the output space coordinates by the number of pixels in the output space per input space sample, and adding a vector (K1, K2) where K1 and K2 are either 0 or minus 0.5, depending on the colour component and the desired relative rotational orientation of the image. The image is further converted to a CMY space for outputting to a printer of the camera.

### SUMMARY OF THE INVENTION

Accordingly, the invention preferably seeks to mitigate, alleviate or eliminate one or more of the above mentioned problems singly or in any combination. In particular, it may be seen as an object of the present invention to provide a method of reducing the resolution of a digital image by binning together pixels of the image so that optical centres of the binned pixels remain evenly distributed over the image.

This object and several other objects are obtained in a first aspect of the invention by providing a method for reducing a resolution of a digital colour image where the digital colour image comprises pixels arranged in a colour mask of at least three different colours, the pixels comprise first pixels, second pixels, third pixels and fourth pixels, the method comprising:
- recording a digital colour image using the colour mask,
- selecting nxn first pixels outlining a first square, and using values of these selected nxn pixels for generating a value of a first macro pixel,
- selecting nxn second pixels outlining a second square being rotated 45 degrees and shifted horizontally relative to the first square, and using values of these selected nxn pixels for generating a value of a second macro pixel,
- selecting nxn third pixels outlining a third square being rotated 45 degrees and shifted vertically relative to the first square, and using values of the nxn pixels for generating a value of a third macro pixel,
where each of the first, second and third macro pixels has an optical centre determined by the relative positions of the pixels used to generate the value of the macro pixel,
wherein the pixels used to generate values of the first, second and third macro pixels are selected to position the optical centres of each of the first, second and third macro pixels at identical positions within each of the first, second and third macro pixels, so that these optical centres form a uniform grid, and
- selecting M pixels from nxn fourth pixels outlining a fourth square oriented identically to and shifted diagonally relative to the first square, M being greater than zero and less than or equal to nxn, and using values of the M pixels for generating a value of a fourth macro pixel.

The invention is particularly, but not exclusively, advantageous for reducing the pixel resolution of a digital image by binning pixels together and, thereby, obtaining a digital image having a reduced number of pixels.

It may be an advantage of the first aspect of the invention to generate macro pixels by selecting first, second and third pixels so that the optical centres of each of the corresponding first, second and third macro pixels are evenly distributed over the digital image, since this may provide an image quality of the downsized image which is less affected by pixel binning.

It may also be an advantage of the first aspect of the invention to generate the fourth macro pixel by selecting M pixels from the nxn fourth pixels outlining the fourth square oriented identically to and shifted diagonally relative to the first square, where M is greater than zero and less than or equal to nxn. By selecting M pixels out of nxn pixels of the fourth pixels it may be achieved that the optical centres of all macro pixels are evenly distributed or almost evenly distributed. By providing an evenly or an almost evenly distribution of optical centres the image quality of the downsized image is less affected by pixel binning, since clustering of pixels is avoided.

It may be another advantage of the first aspect of the invention that the method of reducing the resolution of a digital image provides a method for reducing the amount of image pixels of the original image by downsizing the image using colour binning without reducing the image quality significantly.

It may be a further advantage of the first aspect of the invention that the method of reducing the resolution of a digital image improves the preservation of details of the downsized digital image relative to the original image.

Furthermore, it may be another advantage of the first aspect of the invention that the method generates less aliasing.

It may also be an advantage of the first aspect of the invention that the pixel layout of the downsized digital image is the same or almost the same as the pixel layout of the original image.

It may be another advantage of the first aspect of the invention that the optical centres of the first, second and third macro pixels are always evenly distributed independently of the value M of the selected M pixels.

In an embodiment the method of reducing a resolution of a digital colour image comprises selecting M pixels so that the resulting optical centre is displaced a distance D relative to a uniform grid, where the distance D depends on both M and positions of the M pixels relative to a fourth square enclosing the M pixels in a way so that:
- for nxn being an uneven integer: M=nxn results in D=0, and
- for nxn being an even integer: M=nxn results in D>0 and M<nxn results in D=0 for some values of M.

Thus, when nxn is an uneven number, selection of all nxn pixels may provide an even distribution of all optical centres since the distance D equals zero. When nxn is an even number, it may be possible to select a number M of pixels which will provide an even distribution of optical centres since the distance D equals zero for that selection. Also, when nxn is an even number, other selections of M pixels, for example selection of all nxn pixels, may result in a distance D greater than zero.

In general there may be different possibilities of choosing the number M for obtaining a distance D equal to zero. It may be an advantage that it is always possible to choose a number M, for example M=1, so that all optical centres are evenly distributed. It may be another advantage that if M is chosen so that the distance D does not equal zero, the distance D is small enough not to reduce the image quality significantly.

In a particular embodiment the distance D depends on both M and positions of the M pixels relative to a fourth square in a way so that: for nxn = 4 then M=1 results in D=0 and M>1 results in D>0. Thus, in particular when four pixels outline a fourth square, selection of one pixel of the four pixels may provide an even distribution off all optical centres of all macro pixels.

In another particular embodiment the distance D depends on both M and positions of the M pixels relative to a fourth square in a way so that: for nxn = 16 then M=1 and M=9 results in D=0. Thus, in particular when sixteen pixels outline a fourth square, selection of either one pixel or nine pixels of the four pixels may provide an even distribution off all optical centres of all macro pixels.

Accordingly, whenever nxn is an uneven number all optical centres are evenly distributed and when nxn is an even number the optical centres are evenly distributed for some numbers M of the selected pixels. Thus, whether the number nxn is even or uneven and independent of the value of nxn it may be possible to obtain an even distribution of optical centres of all macro pixels.

In an embodiment of the method of reducing a resolution of a digital colour image the second square overlaps with the first square, the third square overlaps with the first square and the fourth square overlaps with one or more of the first, second and third squares.

In a further embodiment of the method of reducing a resolution of a digital colour image wherein nxn equals four and M equals one, the method comprises:
- selecting one fourth pixel and using a value of the one fourth pixel for generating a value of a fourth macro pixel, the selected pixel and the resulting optical centre having a zero distance D relative to a uniform grid, the three remaining fourth pixels being disregarded.

Accordingly, by selecting one fourth pixel, for example one blue pixel, and disregarding the remaining three blue pixels, the optical centre of all macro pixels may be evenly distributed.

In another embodiment of the method of reducing a resolution of a digital colour image wherein nxn equals four and M equals four the method comprises:
- selecting four fourth pixels and using values of the four fourth pixels to generate a value of a fourth macro pixel, the selected pixels providing an optical centre having an a distance D relative to a uniform grid.

Accordingly, by selecting four fourth pixels, for example four blue pixels, the optical centres of the red and green macro pixels may be evenly distributed whereas the optical centre of the blue macro pixels may be displaced a distance D relative to optical centres of the other macro pixels.

In yet another embodiment of the method of reducing a resolution of a digital colour image wherein nxn equals four and M equals three, the method comprises:
- selecting a one fourth pixel having a zero distance D relative to a uniform grid, selecting two fourth pixels being nearest to the first selected one pixel and using the three selected fourth pixels to generate a value of a fourth macro pixel, the selected pixels providing an optical centre having a reduced distance D relative to a uniform grid, the one remaining fourth pixel being disregarded.

Accordingly, by selecting three fourth pixels, for example three blue pixels, the optical centres of the red and green macro pixels may be evenly distributed whereas the optical centre of the blue macro pixels may have a reduced distance D relative to optical centres of the other macro pixels.

In an example of the method for reducing a resolution of a digital colour image by a factor of two in both a horizontal and a vertical direction, the digital colour image is arranged in sets of 16 pixels, where each set comprising four first pixels, four second pixels, four third pixels and four fourth pixels constitutes a collection of pixels for generating values of four macro pixels comprising a first macro pixel, a second macro pixel, a third macro pixel and a fourth macro pixel, the method comprising:
recording a digital colour image using a colour mask;
for each set of 16 pixels:
   - selecting four first pixels and using values of the four pixels for generating a value of the first macro pixel;
   - selecting four second pixels and using values of the four pixels for generating a value of the second macro pixel;
   - selecting four third pixels and using values of the four pixels for generating a value of the third macro pixel;
where each of the first, second and third macro pixels has an optical centre determined by the relative positions of the pixels used to generate the value of the macro pixel;
wherein the pixels used to generate values of the first, second and third macro pixels are selected to position the optical centres of each of the first, second and third macro pixels at identical positions within each of the first, second and third macro pixels, so that these optical centres form a uniform grid, and
generating a value of a fourth macro pixel using either one of:
- selecting one fourth pixel and using a value of the one fourth pixel for generating a value of the fourth macro pixel, the selected pixel providing an optical centre having a zero distance relative to the uniform grid, the three remaining fourth pixels being disregarded;
- selecting four fourth pixels and using values of the four fourth pixels to generate a value of the fourth macro pixel, the selected pixels providing an optical centre having a distance relative to the uniform grid; or
- selecting a first fourth pixel having zero distance relative to the uniform grid, selecting two fourth pixels being nearest to the selected first pixel and using the three selected pixels to generate a value of the fourth macro pixel, the selected pixels providing an optical centre having a reduced distance relative to the uniform grid, the one remaining pixel of the fourth pixel-type being disregarded.

Accordingly, the second aspect of the invention describes a method for reducing a resolution of a digital colour image by a factor of two in both a horizontal and a vertical direction in the case of 2x2 colour binning.

In an embodiment of the method of reducing a resolution of a digital colour image the colour mask may be a Bayer mask comprising one red pixel, two green pixels and one blue pixel.

In an embodiment of the method of reducing a resolution of a digital colour image, values of selected pixels of respective first, second, third and fourth pixels may be added for generating a value of the respective first, second, third and fourth macro pixel.

In another embodiment of the method of reducing a resolution of a digital colour image, values of selected pixels of respective first, second, third and fourth pixels may average for generating a value of the respective first, second, third and fourth macro pixel.

In a third aspect the invention relates to a system adapted for reducing a resolution of a digital colour image comprising pixels arranged in a colour mask of at least three different colours, the pixels comprise first pixels, second pixels, third pixels and fourth pixels, the system comprises selection means for,
- selecting nxn first pixels outlining a first square, and using values of these selected nxn pixels for generating a value of a first macro pixel,
- selecting nxn second pixels outlining a second square being rotated 45 degrees and shifted horizontally relative to the first square, and using values of these selected nxn pixels for generating a value of a second macro pixel,
- selecting nxn third pixels outlining a third square being rotated 45 degrees and shifted vertically relative to the first square, and using values of the nxn pixels for generating a value of a third macro pixel,
where each of the first, second and third macro pixels has an optical centre determined by the relative positions of the pixels used to generate the value of the macro pixel,
wherein the pixels used to generate values of the first, second and third macro pixels are selected to position the optical centres of each of the first, second and third macro pixels at identical positions within each of the first, second and third macro pixels, so that these optical centres form a uniform grid, and said system further comprising selection means for,
- selecting M pixels from nxn fourth pixels outlining a fourth square oriented identically to and shifted diagonally relative to the first square, M being greater than zero and less than or equal to nxn, and using values of the M pixels for generating a value of a fourth macro pixel.

In a fourth aspect the invention relates to a computer program product capable of reducing a resolution of a digital colour image being recorded using a colour mask, where the digital colour image comprises pixels arranged in the colour mask of at least three different colours, the pixels comprise first pixels, second pixels, third pixels and fourth pixels, said computer program product being adapted to perform the method according to the first aspect or the second aspect.

In a fifth aspect the invention relates to an electronic chip device adapted for reducing a resolution of a digital colour image comprising pixels arranged in a colour mask of at least three different colours, the pixels comprise first pixels, second pixels, third pixels and fourth pixels, the electronic chip device comprises selection means for adapted for carrying out at least one of steps a, b, c and d,
- a) selecting nxn first pixels outlining a first square, and using values of these selected nxn pixels for generating a value of a first macro pixel,
- b) selecting nxn second pixels outlining a second square being rotated 45 degrees and shifted horizontally relative to the first square, and using values of these selected nxn pixels for generating a value of a second macro pixel,
- c) selecting nxn third pixels outlining a third square being rotated 45 degrees and shifted vertically relative to the first square, and using values of the nxn pixels for generating a value of a third macro pixel,
- d) selecting M pixels from nxn fourth pixels outlining a fourth square oriented identically to and shifted diagonally relative to the first square, M being greater than zero and less than or equal to nxn, and using values of the M pixels for generating a value of a fourth macro pixel,
where each of the first, second and third macro pixels has an optical centre determined by the relative positions of the pixels used to generate the value of the macro pixel, and
wherein the pixels used to generate values of the first, second and third macro pixels are selected to position the optical centres of each of the first, second and third macro pixels at identical positions within each of the first, second and third macro pixels, so that these optical centres form a uniform grid.

Thus, the electronic chip device, for example a CCD chip, may be designed so that for example the selection of first pixels and the generation of a value of a first macro pixel is carried out by the electronic chip device, whereas the selection of second, third and fourth pixels and the generation of values of second, third and fourth macro pixels is carried out by an external processing device or an other image processing device. In general, any of steps a, b, c and d (eg. b and c) may be carried out in the electronic chip device, whereas the remaining steps not carried out in the electronic chip device (eg. a and d) may be carried out by an external processing device or an other image processing device.

Furthermore, the electronic chip device and in particular the selection means may be designed so that the generation of a value of a macro pixel is performed partly on basis of any number of pixels being processed in the electronic chip device and partly on basis of a remaining number of pixels being processed for example in an external processing device. For example the value of one out of nxn selected pixels may be processed in the chip, and the remaining nxn-1 or M-1 pixels may be processed by an external processing device. In another example the values of two out of nxn selected pixels may be processed in the chip, and the remaining nxn-2 or M-2 pixels may be processed by an external processing device. In a general example the Q values of Q pixels out of nxn selected pixels may be processed in the chip, and the remaining nxn-Q or M-Q pixels may be processed by one or more external processing devices or other image processing devices. The processing of values in the chip or the external processing devices may comprise adding values, averaging values or and other mathematical processing of values.

Accordingly, any of steps a, b, c and d may be implemented so that for example in step "a" in 2x2 colour binning, the values of two first pixels may be processed in the electronic chip, and the remaining 2 first pixels may be processed by an external processing device. Any of the remaining steps b, c and d may be similarly distributed so that some pixels are processed by the electronic chip and the remaining pixels are processed by an external processing device. Alternatively, one or more of steps b, c and d may be implemented exclusively in the electronic chip device and/or exclusively in the external processing device so that, for example, in step "b" all four second pixels are processed in the external processing device; or for example in step "d" all M fourth pixels are processed in the external processing device.

It may be an advantage that the electronic chip device is configured for carrying out at least one of steps a, b, c and d so that other steps of a, b, c and d can be carried out by external processing devices, thereby, enabling more flexible design possibilities of the electronic chip device.

In an embodiment the invention relates to an electronic chip device according to the fourth aspect, for use in a camera or system providing any remaining step(s) of steps a, b, c and d not carried out by the electronic chip device, the electronic chip device being configured to provide output image data comprising
- values of macro pixels corresponding to any of steps a, b, c and d carried out by the electronic chip device, and
- values of any first, second, third and/or fourth pixels corresponding to any of steps a, b, c and d not carried out by the electronic chip device,
wherein the output image data is formatted so that a camera, a system or an external processing device configured for reducing a resolution of a digital colour image can readily distinguish between values of macro pixels and any values of first, second, third and/or fourth pixels in the output image data.

Thus, the electronic chip device may be configured to provide output image data comprising only values of some of the first, second, third and fourth macro pixels (eg. second and third macro pixels) and values of only some of the first, second, third and fourth pixels (eg. first and fourth pixels). Accordingly, any other system, for example a camera or an external processing device may be configured for generating the remaining macro pixels not generated by the electronic chip device (eg. first and fourth macro pixels) on basis of values of pixels provided by the electronic chip device (eg. values of first and fourth pixels).

In an embodiment related to the sixth aspect of the invention the electronic chip device may provide output image data formatted in accordance with a predetermined format for exchange of data between an electronic chip device and anyone of a camera, a system comprising the electronic chip or an external processing device.

Thus, by providing the output image data in a particular data format the electronic chip device is capable of exchanging data with for example an external processing device.

In summary the basic idea of an embodiment of the invention is to provide a method for reducing the pixel resolution of a digital image by binning pixels together to form macro pixels. The digital image comprises pixels arranged in a colour mask of at least three different colours. The colour mask can be a Bayer mask comprising one red pixel, two green pixels and one blue pixel arrange in a 2 by 2 matrix. The pixel binning method comprises selecting a number of pixels of each colour. For example, in order to obtain a factor two resolution reduction, four red pixels can be binned for generating a red macro pixel and eight green pixels can be binned for generating two green macro pixels. By selecting for example only one blue pixel and using that pixel for generating a blue macro pixel the optical centres of the macro pixels will be evenly distributed over the downsized image. By reducing the resolution with a factor of two, the amount of pixels of the downsized image is reduced with a factor of four.

The first, third, fourth, fifth and sixth aspects of the present invention, as well as any preferred features or elements of these, may each be combined with any of the other aspects. These and other aspects of the invention will be apparent from and elucidated with reference to the embodiments described hereinafter.

### BRIEF DESCRIPTION OF THE FIGURES

The present invention will now be explained, by way of example only, with reference to the accompanying Figures, where
Figure 1 illustrates a photoelectric image sensor 100, for example a CCD sensor or a CMOS sensor.
Figure 2 illustrates a prior art method for reducing the amount of pixels with a ratio of four by using a 2x2 colour binning method.
Figure 3 illustrates the result of a prior art method of colour binning.
Figure 4 illustrates the improved method for colour binning of pixels according to an embodiment of this invention.
Figure 5 shows the resulting distribution of optical centres 120 when the pixel binning method described in relation to Figure 4 is used.
Figures 6 and 7 show alternative aspects of the method of pixel binning described in relation to Figure 4.
Figure 8 shows the effect of selecting four or three blue pixels as shown in relation to Figures 6 and 7.
Figure 9 shows an example of 3x3 colour binning for achieving a factor nine pixel reduction.
Figure 10 shows an example of 4 by 4 colour binning.
Figure 11 shows alternative examples of selecting the fourth square enclosing blue pixels.
Figure 12 shows a system 1210 adapted for performing colour binning.
Figure 13 illustrates the effect of colour binning - the upper image shows the effect of reducing the image resolution with a factor of two using sub-sampling and the bottom image shows the effect of 2x2 colour binning according to the method illustrated in Figure 6.
Figure 14 illustrates the effect of colour binning according to this invention relative to prior art colour binning methods as illustrated in Figure 2.

### DETAILED DESCRIPTION OF THE INVENTION

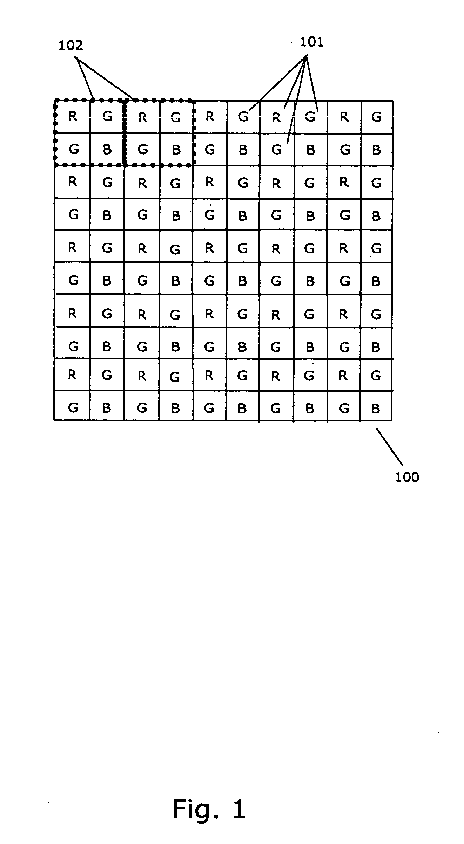

Figure 1 illustrates a photoelectric image sensor 100, for example a CCD sensor or a CMOS sensor. The image sensor 100 comprises a number of photo sensitive pixels 101 arranged for example in a matrix as illustrated. In order to make the pixels sensitive to different colours, the pixels may be covered with transparent material of different colours. In Figure 1, the pixels are covered with red R, green G and blue B colour filters which are arranged in a colour mask 102 known as a Bayer mask. By combining the red, blue and the two green pixels in the colour mask 102 in a post processing procedure, the pixels 101 are converted into a colour image.

For reasons of convenience, in the following, pixels covered with transparent material of a particular colour, such as red R, will be referred to as colour pixels, such as red pixels. The colour pixels may be arranged in other types of colour masks, for example CMY colour masks. Also, the colours of the colour mask may deviate from the example shown in Figure 1, for example the green colour of pixels in the first row may deviate more or less relative to the green colour of pixels in the second row.

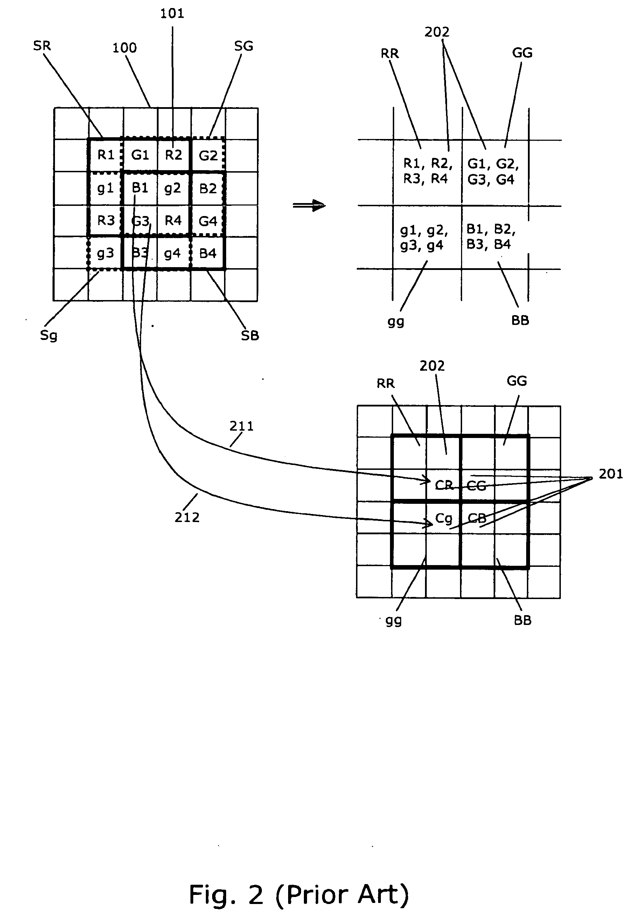

Figure 2 illustrates a method for reducing the amount of pixels with a ratio of four by using a 2x2 colour binning method for generating binned pixels 202, also referred to as macro pixels 202, as disclosed in US2006/0203113. As illustrated four red pixels, R1-R4, are binned together to form a red macro pixel RR, four green pixels, G1-G4, are binned together to form a green macro pixel GG, other four green pixels, g1-g4, are binned together to form another green macro pixel gg, and four blue pixels, B1-B4, are binned together to form a blue macro pixel BB.

In general by binning together pixels, n by n, referred to as nxn colour binning, the amount of pixels in the downsized image is reduced with "n multiplied by n", and the resolution of the downsized image is reduced with n in the horizontal and vertical directions. For example, 2x2 colour binning reduces the amount of pixels with four and reduces the resolution with two in horizontal and vertical directions.

In this description colour binning should be understood as combining pixels or values of pixels for generating a macro pixel or a value of a macro pixel. The pixels or the values of pixels can for example be combined by adding, averaging or using other mathematical combining functions for generating the macro pixel or the value of the macro pixel. Furthermore, in this description colour binning and pixel binning are used as synonyms for the same method for reducing the resolution of a digital colour image.

The strategy for selecting pixels to be binned is illustrated in Figure 2, which shows that all red pixels R1-R4 enclosed by the square SR are binned into a macro pixel RR, four green pixels G1-G4 enclosed by the square SG are binned into a macro pixel GG, other four green pixels g1-g4 enclosed by the square Sg are binned into a macro pixel gg, and all blue pixels B1-B4 enclosed by the square SB are binned into macro pixel GG.

For reasons of convenience green pixels related to one green macro pixel GG are referred to using capital letters G1-G4, whereas the other green pixels related to the other green macro pixel gg are referred to using lower-case letters g1-g4. Thus, it should be understood that pixels G1-G4 and g1-g4 and macro pixels GG and gg have the same green colour. However, in special cases the colours of distinct green pixels may deviate.

The macro pixels RR, GG, gg and BB are characterised by optical centres 201 as illustrated in Figure 2. The location of optical centre CR of the red macro pixel RR corresponds to the "centre of mass" of the pixels R1-R4 as illustrated by arrow 211. Similarly the optical centre Cg of the green macro pixel gg corresponds to the "centre of mass" of the pixels g1-g4. As a result of the prior art method of colour binning, the optical centres 201 tend to cluster in a 2x2 block as illustrated by optical centres CR, CG, Cg, CB.

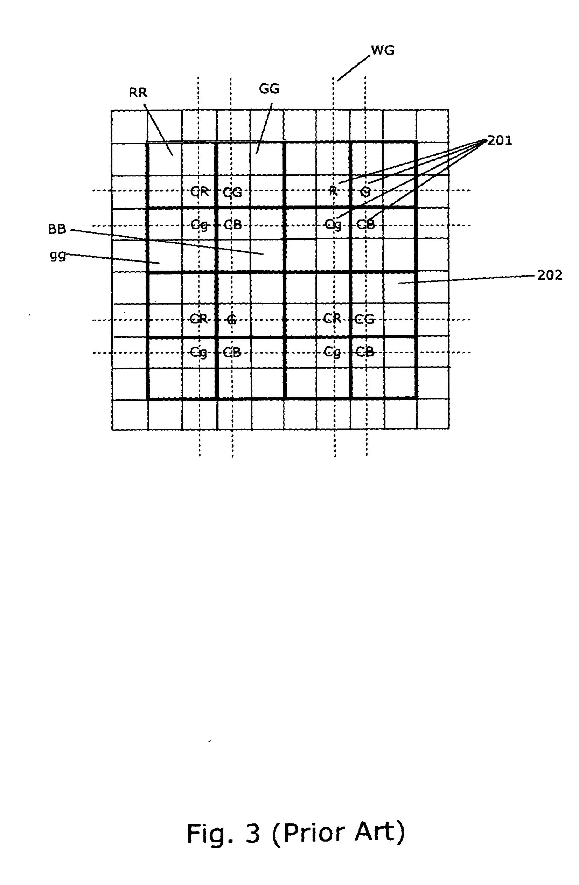

Figure 3 illustrates the result of the prior art method of colour binning for a larger part of the pixel sensor 100. The optical centres 201 clusters in 2x2 blocks. The non-uniformity of the distribution of colour centres over the area of the pixel sensor 100 is illustrated by the non-uniform wire grid WG. The picture which results from post processing the macro pixels 202 looks bad or requires so much additional smoothing that details are lost because of the non-uniform distribution of optical centres 201.

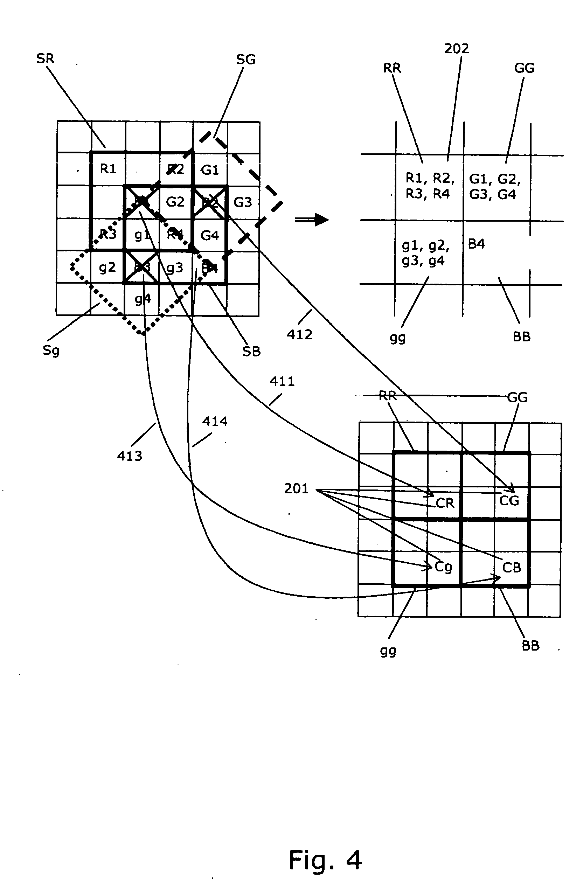

Figure 4 illustrates the improved method for colour binning of pixels according to an embodiment of this invention. The method illustrated in Figure 4 shows as an example of 2x2 pixel binning. However, the method is equally capable of other pixel reductions, for example 3x3, 4x4 or in general nxn pixel binning.

Figure 4 shows the selection of four red pixels R1-R4 (first pixels) which outlines a first square SR. The values of the red pixels R1-R4 are used for generating the value of the macro pixel RR (the first macro pixel). The value of a pixel 101 may be any analogue electric value, digital value or electron count representative of an intensity of light exposed on the pixels during exposure of an image or other physical value. Accordingly, the value of the macro pixel also corresponds to an intensity of light. The value of the macro pixel can for example be generated by averaging or summing the values of the pixels 101.

In order to obtain a uniform distribution of colour centres 201 of all macro pixels RR, GG, gg, BB, the remaining pixels 101 are selected as follows:
- Four green pixels (second pixels) G1-G4 outlining a second square SG are selected and the values of the four green pixels are used to generate a value of the macro pixel GG (second macro pixel). The second square SG is rotated 45 degrees and shifted horizontally relative to the first square SR.
- Four green pixels g1-g4 (third pixels) outlining a third square Sg are selected and the values of the four green pixels are used to generate a value of the macro pixel gg (third macro pixel). The third square Sg is rotated 45 degrees and shifted vertically relative to the first square SR.
- One blue pixel B4 (fourth pixel) is selected from the four blue pixels B1-B4 which outlines a fourth square SB. The value of the blue pixel B4 is used to generate a value of the macro pixel BB (fourth macro pixel). The fourth square SB is oriented identically to the first square SR. The remaining blue pixels B1-B3 are disregarded as indicated by crossing out these pixels in Figure 4.

The squares SR, SG, Sg, SB, as well as references to positions and rotations of the squares are used only for visualising how the pixels 101 are selected. Clearly, the selection of pixels may be explained otherwise, for example by defining the selection in an algorithm.

Thus, in the example illustrated in Figure 4, the digital colour image is arranged in sets of 16 pixels comprising 4 first pixels of red colour, 4 second pixels of green colour, 4 third pixels of green colour and 4 fourth pixels of blue colour.

Also, the term "selection of pixels" is introduced for eased explanation of the method of pixel binning and, therefore, "selection of pixels" should not necessarily be understood as an action of selecting. Indeed, the method does not require pixels to be selected, but only requires values of particular pixels 101 to be combined, eg. by summing values of particular pixels into a value of a corresponding macro pixel 202.

As a result of the described method of pixel binning, the three optical centres CR, CG and Cg are located in the same lower, right corner of each macro pixel RR, GG and gg. The formations of the optical centres are indicated by arrows 411-413. Thus, the three colour centres CR, CG and Cg are uniformly distributed.

Since only one blue pixel B4 is selected, and since the position of the blue pixel B4 matches the locations of optical centres, all four colour centres CR, CG, Cg and CB are uniformly distributed.

Since the human eye is less sensitive to imperfections in blue colours than green colours the quality of the image is not significantly reduced by selecting only one blue pixel B4 instead of all four blue pixels B1-B4.

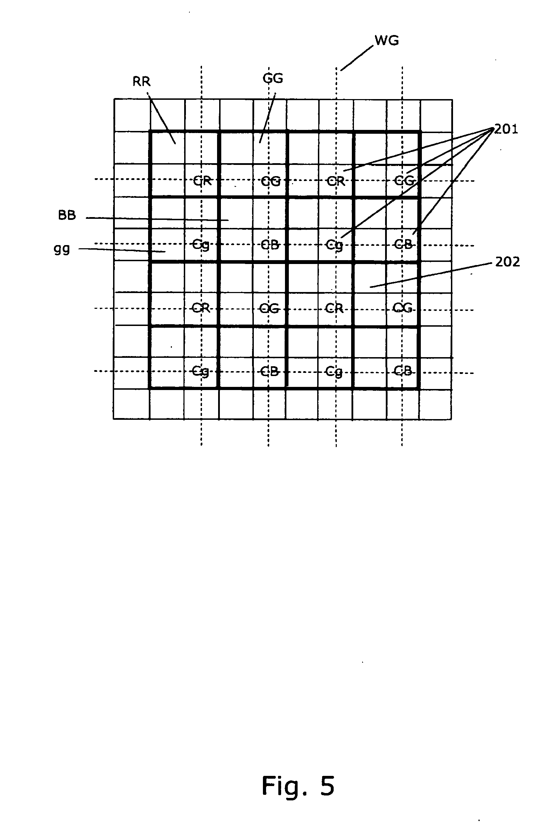

Figure 5 shows the resulting distribution of optical centres 120 when the pixel binning method described in relation to Figure 4 is used. The uniformity of the distribution of colour centres 201 over the area of the pixel sensor 100 is illustrated by the uniform wire grid WG.

The pixel binning method described in relation to Figure 4 may of course be generalised so that any of the other pixel colours are used in place of the blue pixels. For example, four blue pixels B1-B4, four green pixels G1-G4 and four other green pixels g1-g4 may be selected to generate values of macro pixels 202, whereas one red pixel, eg. pixel R1, is selected to generate a value of the red macro pixel RR.

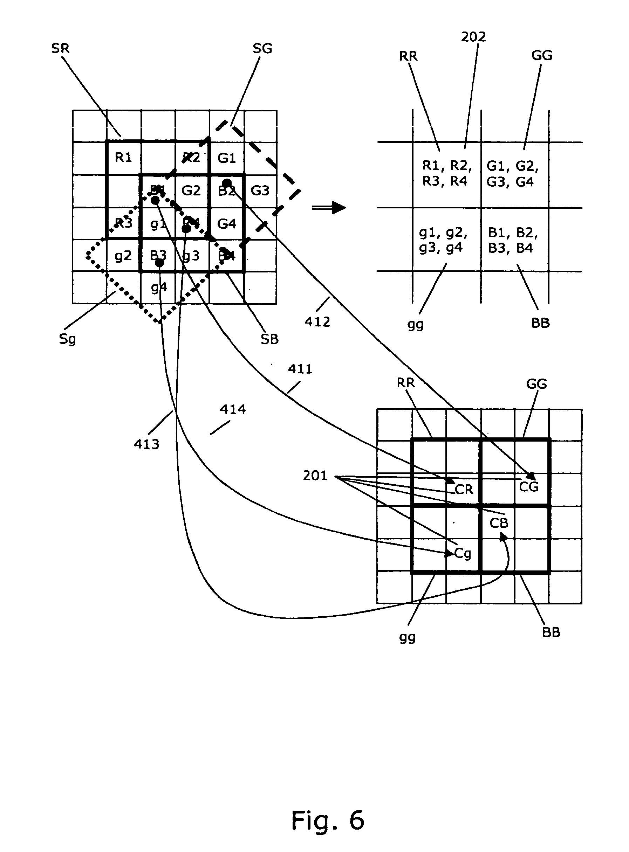

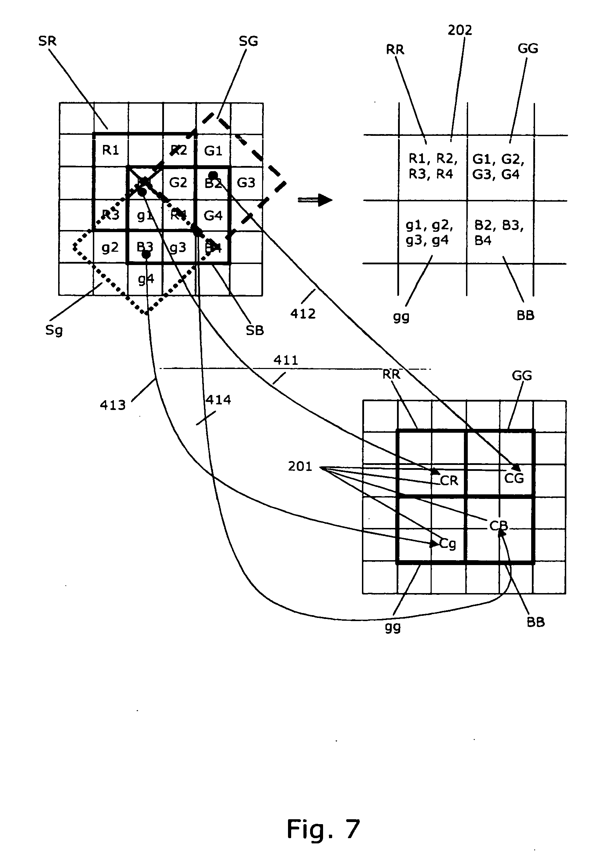

Figures 6 and 7 show alternative aspects of the method of pixel binning described in relation to Figure 4. In Figure 6, instead of selection only one blue pixel B4, all four pixels B1-B4 are selected for generating a value of the macro pixel BB. Since all four pixels B1-B4 are selected, the resulting optical centre CB does not match the uniform distribution of optical centres CR, CG and Cg. In Figure 7, three pixels B2-B4 are selected for generating a value of the macro pixel BB. Since three pixels B2-B4 are selected, the resulting optical centre CB is closer to match the uniform distribution of optical centres CR, CG and Cg as compared to the situation where all four blue pixels B1-B4 are selected.

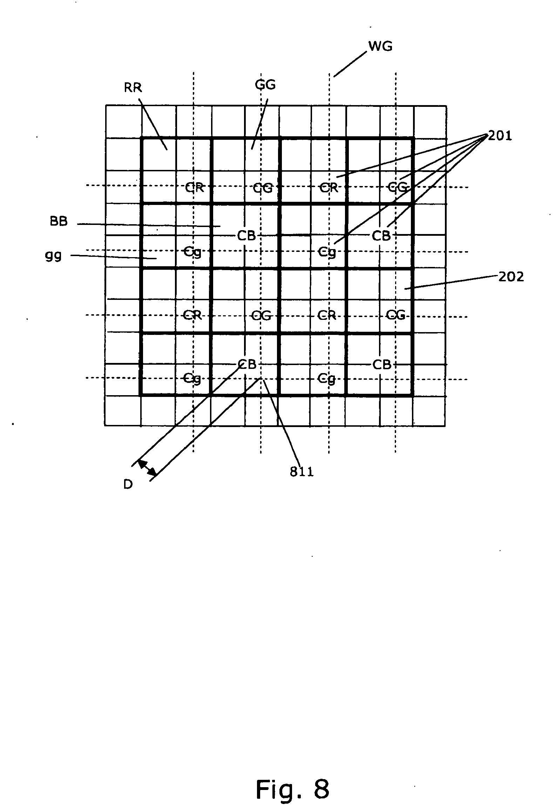

The effect of selecting four or three blue pixels as shown in relation to Figures 6 and 7 is shown in Figure 8. The optical centre CB of the blue macro pixel BB is displaced a distance D relative to the wire grid WG. The effect of non-zero displacements D may be partly or completely compensated for in a post processing procedure where the colour binned image is further processed.

The pixel binning method described in relation to Figures 6 and 7 may of course be generalised similar to the generalisation of the pixel binning example described in relation to Figure 4 so that any of the other pixel colours are used in place of the blue pixels. That is, instead of selecting three or four blue pixels, three or four red pixels may be selected.

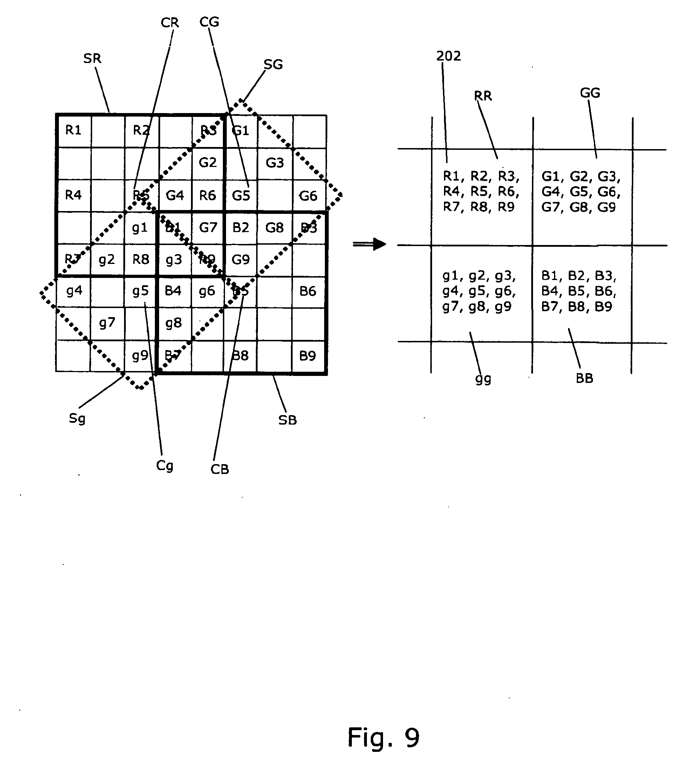

Figure 9 shows an example of 3x3 colour binning for achieving a factor nine pixel reduction. The method for 3x3 colour binning proceeds similar to 2x2 colour binning. However, since each square (SR, SG, Sg, SB) contains an uneven number of pixels to be binned (eg. nine red pixels R1-R9 for square SR) and since binning of that uneven number of pixels for each square (SR, SG, Sg, SB) inherently provides a uniform distribution of optical centres it is not required to disregard pixels in any square. Thus, for 3x3 colour binning the method proceeds as follows:
- Nine red pixels R1-R9 outlining a first square SR are selected and the values of the nine red pixels are used to generate a value of the red macro pixel RR.
- Nine green pixels G1-G9 outlining a second square SG are selected and the values of the nine green pixels are used to generate a value of the green macro pixel GG. The second square SG is rotated 45 degrees and shifted horizontally relative to the first square SR.
- Nine green pixels g1-g9 outlining a third square Sg are selected and the values of the nine green pixels are used to generate a value of the green macro pixel gg. The third square Sg is rotated 45 degrees and shifted vertically relative to the first square SR.
- Nine blue pixels B1-B9 outlining a fourth square Sg are selected and the values of the nine blue pixels are used to generate a value of the blue macro pixel BB. The fourth square SB is oriented identically to the first square SR.

For any embodiments of colour binning, the order of selecting pixels of a particular colour is not essential and may therefore be permuted.

The example of 3x3 colour binning illustrated in Figure 9 can easily be generalised to nxn colour binning where n is an uneven number. For example 5x5 colour binning comprises selection of 25 pixels of a particular colour for each square.

The examples of 2x2 colour binning illustrated in Figures 4-8 can be generalised to nxn colour binning where n is an even number.

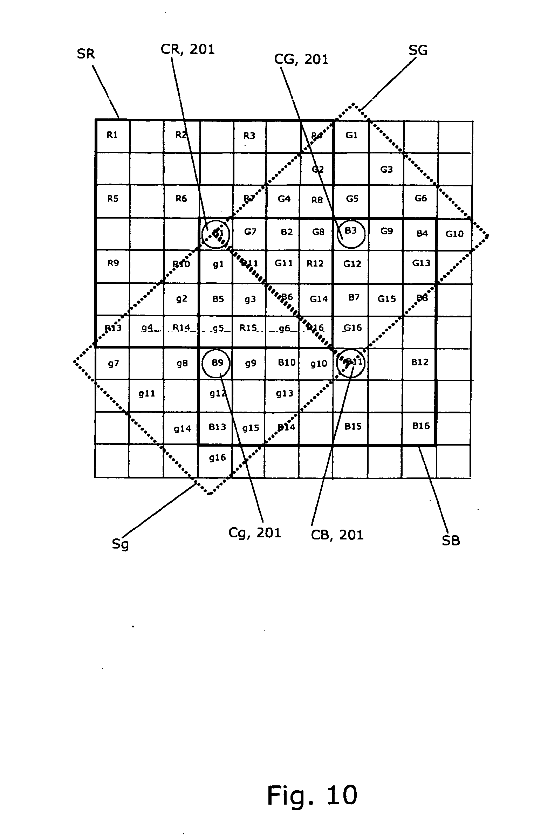

Figure 10 shows an example of nxn=4x4 colour binning where the pixels of the squares SR, SG and Sg are selected similar to the examples given in Figures 4-7. For example the value of the red macro pixel can be generated from the values of the selected pixels R1-R16 enclosed by the square SR.

The pixels used for generating the value of the blue macro pixel BB and which are enclosed by the square SB can be selected in various ways. In order to maintain a uniform distribution of all optical centres of CR, CG, Cg and CB, pixel B11 can be selected and the remaining blue pixels B1-B10 and B12-B16 can be disregarded. Alternatively, the blue pixels B6 - B8, B10 - B12 and B14 - B16, can be selected and the remaining blue pixels B1 - B4, B5, B9 and B13 can be disregarded.

It is also possible to select all blue pixels B1 - B16 or any subset of the blue pixels so that the resulting optical centre CB of the blue macro pixel BB is displaced a distance D relative to the grid WG.

Thus, from the examples given in Figures 4 and 10 of nxn pixel binning where nxn is an even number it is clear that the method can generalised. That is, in general when nxn is an even number, nxn pixels are selected for each of three squares, eg. squares SR, SG and Sg, and M pixels are selected for the last square, eg. square SB. The values of the selected pixels are used for generating values of corresponding macro pixels RR, GG, gg and BB. When M pixels are selected out of nxn pixels enclosed in a square, nxn-M pixels are disregarded.

Depending on the value of M, the displacement D relative to the uniform wire grid WG will either be equal to zero or greater than zero. For example, for M=nxn, D will be greater than zero for even values of nxn.

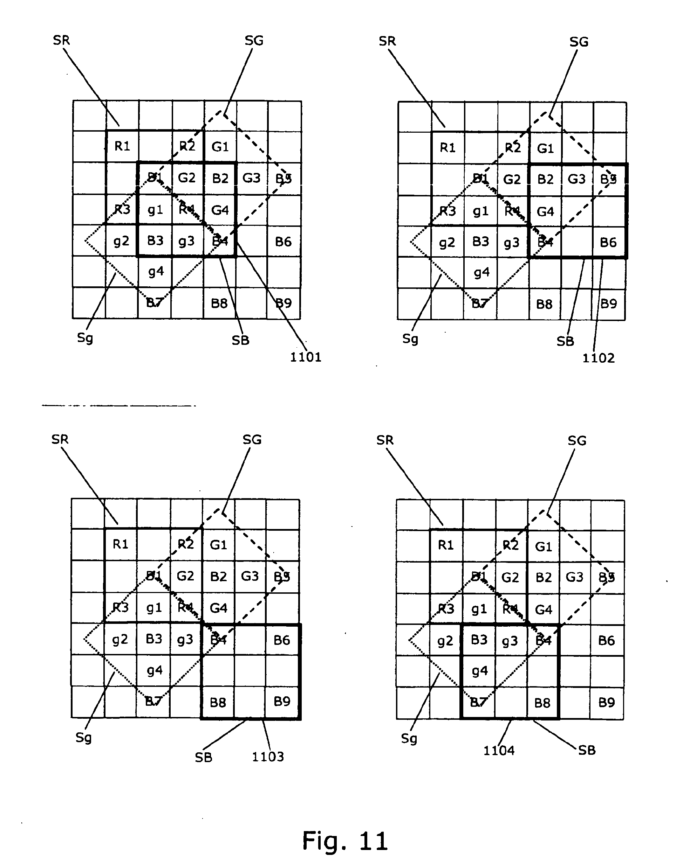

Figure 11 shows alternative examples of selecting four blue pixels for outlining the fourth square SB. Figure 11 shows three positions 1102-1104 of the square SB which are alternatives to position 1101. All four positions 1101-1104 provides the possibility of selecting one blue pixel B4 for generating a value of the macro pixel BB so that the optical centres of all macro pixels (RR,GG,gg,BB) are evenly distributed. Alternatively, pixels B2, B4 and B6 could be selected for position 1102; pixels B4, B6 and B8 could be selected for position 1103; and pixels B3, B4 and B8 could be selected for position 1104, where values of the three selected blue pixels are used for generating a blue macro pixel BB having an optical centre CB, 201 being displaced a distance D relative to the grid WG. Clearly, it is also possible to select all four blue pixels in positions 1101-1104. The possibility of four different positions of the fourth square SB is applicable for all even values of nxn, for example for 4x4 pixel binning.

For general nxn (to be read as n times n) pixel binning where nxn is even or uneven, the resolution of the downsized image is reduced with a factor n in both the horizontal and the vertical direction, and the number of pixels in the down sized image is reduced with a factor of nxn. The dimension of the square (SR, SG, Sg, SB) which encloses the selected nxn pixels is 2xn-1 on both sides. The second square SG is shifted n pixels positions horizontally relative to the first square SR and the third square SG is shifted n pixels positions vertically relative to the first square SR. For general nxn pixel binning, the fourth square SB is shifted as follows:
- for nxn uneven, the fourth square is shifted n pixels horizontally and n pixels vertically;
- for nxn even, the fourth square is either shifted n-1 pixels horizontally and n-1 pixels vertically (position 1101); n+1 pixels horizontally and n-1 pixels vertically (position 1102); n+1 pixels horizontally and n+1 pixels vertically (position 1103); or n-1 pixels horizontally and n+1 pixels vertically (position 1104). It should be understood that whenever reference is made to a statement such as the fourth square SB is shifted diagonally relative to the first square SR, this should be construed as including any the mentioned possibilities of shifting the fourth square, that is, positions 1101-1104 shown in Figure 11.

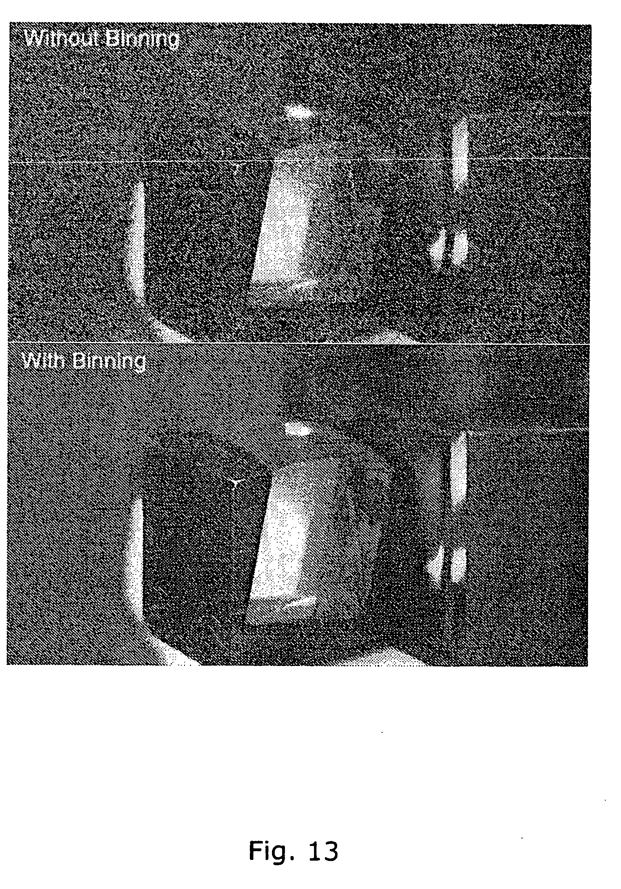

Figure 13 illustrates the effect of colour binning. The upper image shows the effect of reducing the image resolution with a factor of two using sub-sampling, that is every second RGB mask 102 is simply skipped. The bottom image shows the effect of 2x2 colour binning according to the method illustrated in Figure 6; 2x2 colour also reduces the image resolution with a factor of two. The upper image clearly contains a lot of noise contrary the bottom image.

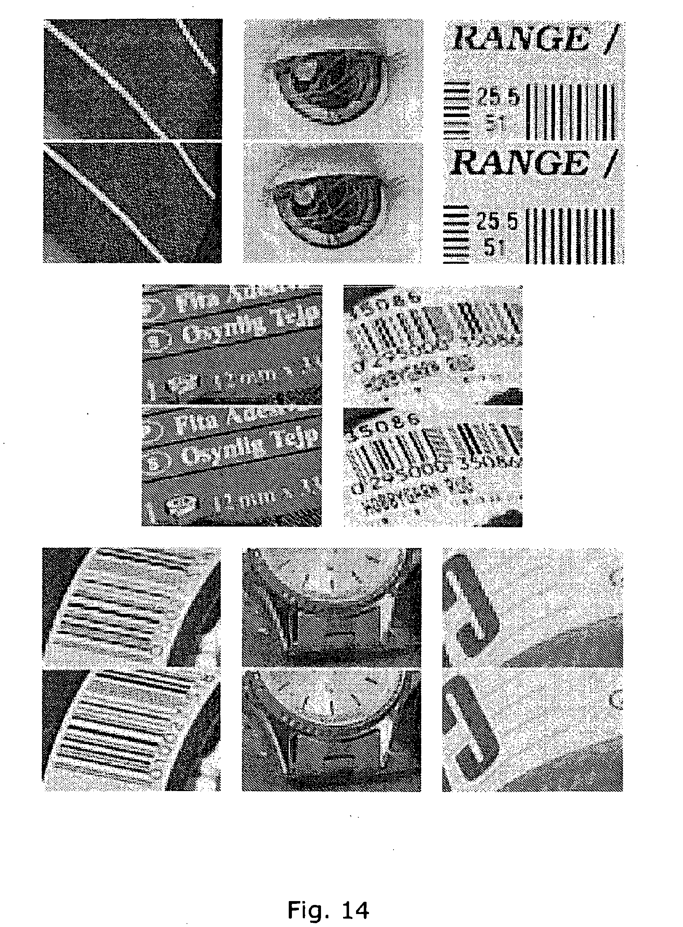

Figure 14 illustrates the effect of colour binning according to this invention relative to prior art colour binning methods as illustrated in Figure 2. The uppermost images show the image results using the prior art colour binning, whereas the bottom images show the image results using the method of colour binning according to this invention. The bottom images show the results using the 2x2 colour binning method illustrated in Figure 6. It is clearly seen that the quality of the bottom images are superior to the quality of the uppermost images. The clearly jagged edges of the uppermost images in Figure 13 are the result of an uneven distribution of the optical centres. Using colour binning methods according to the other embodiments of colour binning according to this invention result in image improvements similar to those illustrated in Figure 13.

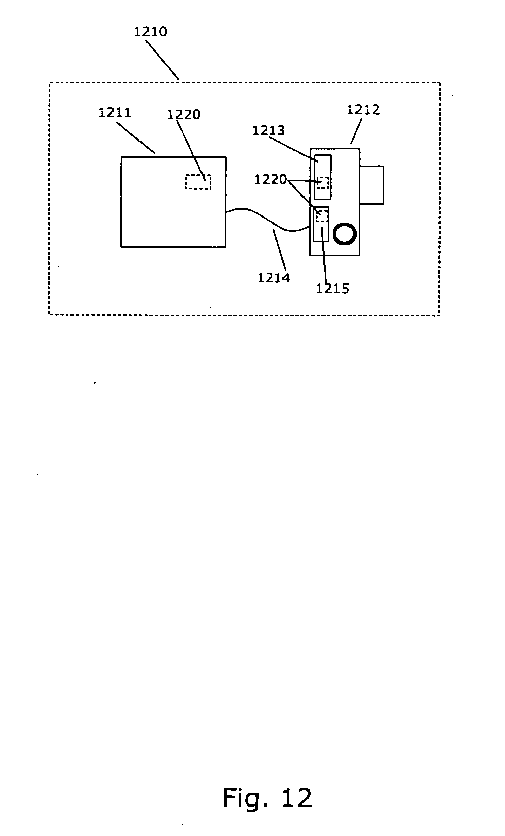

Figure 12 shows a system 1210 adapted for performing colour binning according to any embodiment of the invention. Figure 12 shows a still-picture camera or video camera 1212 comprising a photoelectric image sensor 100, 1213 and possibly also other image processing circuits 1215. The camera 1212 may be connected via a connection 1014 to external processing devices 1211, for example a computer or other image processing devices for further processing of pixel data.

All steps of the method of colour binning may be implemented for example in the image sensor 100, 1213, other processing circuits 1215, or the colour binning method may be distributed over both the image sensor and other processing circuits so that the image sensor processes part of the colour binning method and the other processing circuits processes other parts of the colour binning method.

Similarly, the colour binning method may be distributed over both the processing circuits 1213, 1215 of the camera 1212 and the external processing devices 1211. For example part of the colour binning method is processed by one or more of the processing circuits 1213, 1215 and another part of the colour binning method is processed by external processing devices 1211.

Furthermore, the complete method of colour binning may be implemented exclusively in a single external processing device 1211 or distributed over a group of external processing devices 1211, for example as a computer program product. The image pixel data may be provided to the external processing device 1211 via a connection 1214 from a camera or an image scanner. Alternatively, the image pixel data may provided to the external processing device 1211 via a storage medium, eg. a DVD, or the image pixel data may be provided to the external processing device 1211 via a data connection, eg. an internet connection.

Accordingly, the image sensor 100, 1213, the processing circuits 1215 and/or the external processing device 1211 may comprise selection means 1220 for selecting first, second, third and fourth pixels (R, G, g, B) and for and using values of the selected pixels for generating values of a respective first, second, third and fourth macro pixels. Alternatively, the image sensor 100, 1213, the other processing circuits 1215 and/or the external processing device 1211 may comprise separate selection means for selecting pixels (not illustrated) and separate generating means (not illustrated) for using values of the selected pixels for generating values of the respective macro pixels.

The selection means 1220 may be software-implemented selection means or a hardware-implemented selection means that are implemented or integrated for example in the image sensor. The selection means 1220 may also be implemented as a combination of software and hardware implementations. The method of colour binning may be implemented in a single selection means 1220 comprised eg by the image sensor 1213, or the method of colour binning may distributed over more selection means 1220 comprised by one or more of an image sensor 1213, a processing circuit 1215 and an external processing device 1211. Similarly, the separate selection means and generating means may be implemented in hardware or software.

In an example of 2x2 colour binning, the colour binning procedure could for example be distributed over the image sensor 1213 and an external processing device 1211 so that values of two red pixels R1, R2 are added in the image sensor 1213 whereas values of the two remaining red pixels R3, R4 are added in a subsequent step in an external processing device 1211. The procedure can be repeated for the pixels of all, or some, of the other colours. In another example of 2x2 colour binning, for example red and blue pixels are binned in the image sensor 1213, whereas the green pixels are binned in an external processing device 1211. It may be advantageous to perform colour binning in the image sensor 1213 for obtaining a high speed of pixel readout or for obtaining a higher signal to noise ratio.

Thus, it should be understood that generating a value of a macro pixel (RR,GG, gg, BB) means that values of any number of pixels may be processed, eg added, by selection means 1220 in the electronic chip device 1213 also referred to as the image sensor 1213. For example the value of one pixel (R1 or B1) out of nxn selected pixels (R1-R4 or B1-B4) may be processed in the chip, and the remaining nxn-1 or M-1 pixels (R2-R4 or B2-B4) may be processed by an external processing device 1211. In another example the values of two out of nxn selected pixels (R1-R4) may be processed by selection means 1220 in the chip, and the remaining nxn-2 or M-2 pixels may be processed by selection means 1220 in external processing devices 1211 or other image processing circuits 1215. In a general example the Q values of Q pixels out of nxn selected pixels may be processed in the electronic chip device 1213 or the processing device 1215 and the remaining nxn-Q or M-Q pixels may be processed by one or more external processing devices 1211 or other processing circuits 1215. The processing of values in the chip or the external processing devices may comprise adding values, averaging values or and other mathematical processing of values.

In another example of distributing the colour binning procedure, the electronic chip device 1213, for example a CCD chip, may be designed so that for example the selection of first pixels R1-R4 and the generation of a value of a first macro pixel RR is carried out by the selection means 1220 in electronic chip device 1213, whereas the selection of second G1-G4, third g1-g4 and fourth pixels B1-B4 and generation of values of second GG, third gg and fourth BB macro pixels is carried out by selection means 1220 in an external processing device 1211 or an other image processing device 1215. In another example the selection of second pixels G1-G4 and third pixels g1-g4 as well as the generation of a value of a second macro pixel GG and the value of a third macro pixel gg is carried out by the selection means 1220 in electronic chip device 1213, whereas the selection of first pixels R1-R4 and fourth pixels B1-B4 as well as generation of values of a first macro pixel RR and a fourth macro pixel BB is carried out by selection means 1220 in an external processing device 1211 or an other image processing device 1215.

Any of the above-mentioned examples of distributing the steps of the method of colour binning may be combined with each other and distributed over various processing devices. Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A method for reducing a resolution of a digital colour image (100) where the digital colour image comprises pixels (101) arranged in a colour mask (102) of at least three different colours, the pixels comprise first pixels (R), second pixels (G), third pixels (g) and fourth pixels (B), the method comprising:
- recording a digital colour image using the colour mask 102),
- selecting nxn first pixels (R) outlining a first square (SR), and using values of these selected nxn pixels for generating a value of a first macro pixel (202, RR),
- selecting nxn second pixels (G) outlining a second square (SG) being rotated 45 degrees and shifted horizontally relative to the first square (SR), and using values of these selected nxn pixels for generating a value of a second macro pixel (202, GG),
- selecting nxn third pixels (g) outlining a third square (Sg) being rotated 45 degrees and shifted vertically relative to the first square (SR), and using values of the nxn pixels for generating a value of a third macro pixel (202, gg),
where each of the first, second and third macro pixels has an optical centre (201, CR, CG, Cg) determined by the relative positions of the pixels used to generate the value of the macro pixel (202),
wherein the pixels used to generate values of the first, second and third macro pixels are selected to position the optical centres (201) of each of the first, second and third macro pixels (202) at identical positions within each of the first, second and third macro pixels, so that these optical centres form a uniform grid (WG), and
- selecting M pixels from nxn fourth pixels (B) outlining a fourth square (SB) oriented identically to and shifted diagonally relative to the first square (SR), M being greater than zero and less than or equal to nxn, and using values of the M pixels for generating a value of a fourth macro pixel (202,BB).

2. A method according to claim 1, wherein the selected M pixels and the resulting optical centre (CB, 201) are displaced a distance (D) relative to the uniform grid (WG), where the distance (D) depends on both M and positions of the M pixels relative to the fourth square (SB) in a way so that:
- for nxn being an uneven integer: M=nxn results in D=0, and
- for nxn being an even integer: M=nxn results in D>0 and M<nxn results in D=0 for some values of M.

3. A method according to claim 2, wherein the distance (D) depends on both M and positions of the M pixels relative to the fourth square (SB) in a way so that:
- for nxn = 4: M=1 results in D=0 and M>1 results in D>0.

4. A method according to claim 2, wherein the distance (D) depends on both M and positions of the M pixels relative to the fourth square (SB) in a way so that:
- for nxn = 16: M=1 and M=9 results in D=0.

5. A method according to claim 1, wherein the second square (SG) overlaps with the first square (SR), the third square (Sg) overlaps with the first square (SR) and the fourth square (SB) overlaps with one or more of the first, second and third squares.

6. A method according to claim 1 wherein nxn equals four and M equals one, the method thus comprising:
- selecting one fourth pixel (B) and using a value of the one fourth pixel for generating a value of a fourth macro pixel (BB), the selected pixel and the resulting optical centre (CB) having a zero distance (D) relative to the uniform grid (WG), the three remaining fourth pixels (B) being disregarded.

7. A method according to claim 1 wherein nxn equals four and M equals four, the method thus comprising:
- selecting four fourth pixels (B) and using values of the four fourth pixels to generate a value of the fourth macro pixel (BB), the selected pixels providing an optical centre (CB) having a distance (D) relative to the uniform grid (WG).

8. A method according to claim 1 wherein nxn equals four and M equals three, the method thus comprising:
- selecting a one fourth pixel (B) having a zero distance (D) relative to the uniform grid (WG), selecting two fourth pixels (B) being nearest to the first selected one pixel (B) and using the three selected fourth pixels (B) to generate a value of the fourth macro pixel (BB), the selected pixels providing an optical centre (CB) having a reduced distance (D) relative to the uniform grid (WG), the one remaining fourth pixel (B) being disregarded.

9. A method according to claim 1 , wherein the colour mask is Bayer mask comprising one red pixel (R), two green pixels (g, G) and one blue pixel (B).

10. A method according to claim 1 , wherein the first pixel is a red pixel (R), the second pixel is a green pixel (g), the third pixel is green pixel (G) and the fourth pixel is a blue pixel (B).

11. A method according to claim 1 , wherein the values of the selected pixels of respective first, second, third and fourth pixels (R, G, g, B) are added for generating a value of the respective first, second, third and fourth macro pixel (RR, GG, gg, BB).

12. A method according to claim 1, wherein the values of the selected pixels of respective first, second, third and fourth pixels (R, G, g, B) are averaged for generating a value of the respective first, second, third and fourth macro pixel (RR, GG, gg, BB).

13. A system (1210) configured for reducing a resolution of a digital colour image (100) comprising pixels (101) arranged in a colour mask (102) of at least three different colours, the pixels comprise first pixels (R), second pixels (G), third pixels (g) and fourth pixels (B), the system comprises selection means (1220) for,
- selecting nxn first pixels (R) outlining a first square (SR), and using values of these selected nxn pixels for generating a value of a first macro pixel (202, RR),
- selecting nxn second pixels (G) outlining a second square (SG) being rotated 45 degrees and shifted horizontally relative to the first square (SR), and using values of these selected nxn pixels for generating a value of a second macro pixel (202, GG),
- selecting nxn third pixels (g) outlining a third square (Sg) being rotated 45 degrees and shifted vertically relative to the first square (SR), and using values of the nxn pixels for generating a value of a third macro pixel (202, gg),
where each of the first, second and third macro pixels has an optical centre (201, CR, CG, Cg) determined by the relative positions of the pixels used to generate the value of the macro pixel (202),
wherein the pixels used to generate values of the first, second and third macro pixels are selected to position the optical centres (201) of each of the first, second and third macro pixels (202) at identical positions within each of the first, second and third macro pixels, so that these optical centres form a uniform grid (WG), and said system (1210) further comprising selection means (1220) for,
- selecting M pixels from nxn fourth pixels (B) outlining a fourth square (SB) oriented identically to and shifted diagonally relative to the first square (SR), M being greater than zero and less than or equal to nxn, and using values of the M pixels for generating a value of a fourth macro pixel (BB).

14. A computer program product capable of reducing a resolution of a digital colour image (100) being recorded using a colour mask (102), where the digital colour image (100) comprises pixels (101) arranged in the colour mask of at least three different colours, the pixels comprise first pixels (R), second pixels (G), third pixels (g) and fourth pixels (B), said computer program product being configured to perform the method according to claim 1 or claim 9.

15. An electronic chip device (1213, 1215) for use in a camera (1212) or system (1210), the electronic chip device being configured for reducing a resolution of a digital colour image (100) comprising pixels (101) arranged in a colour mask of at least three different colours, the pixels comprise first pixels (R), second pixels (G), third pixels (g) and fourth pixels (B), the electronic chip device comprises selection means (1220) configured for carrying out at least one of steps a, b, c and d,
- a) selecting nxn first pixels (R) outlining a first square (SR), and using values of these selected nxn pixels for generating a value of a first macro pixel (202, RR),
- b) selecting nxn second pixels (G) outlining a second square (SG) being rotated 45 degrees and shifted horizontally relative to the first square (SR), and using values of these selected nxn pixels for generating a value of a second macro pixel (202, GG),
- c) selecting nxn third pixels (g) outlining a third square (Sg) being rotated 45 degrees and shifted vertically relative to the first square (SR), and using values of the nxn pixels for generating a value of a third macro pixel (202, gg),
- d) selecting M pixels from nxn fourth pixels (B) outlining a fourth square (SB) oriented identically to and shifted diagonally relative to the first square (SR), M being greater than zero and less than or equal to nxn, and using values of the M pixels for generating a value of a fourth macro pixel (202, BB),
where each of the first, second and third macro pixels has an optical centre (201, CR, CG, Cg) determined by the relative positions of the pixels used to generate the value of the macro pixel (202), and
wherein the pixels used to generate values of the first, second and third macro pixels are selected to position the optical centres (201) of each of the first, second and
third macro pixels (202) at identical positions within each of the first, second and third macro pixels, so that these optical centres form a uniform grid (WG).

16. The electronic chip device (1213, 1215) according to claim 15, for use in a camera (1212) or system (1210) providing any remaining step(s) of steps a, b, c and d not carried out by the electronic chip device (1213, 1215), the electronic chip device being configured to provide output image data comprising
- values of macro pixels corresponding to any of steps a, b, c and d carried out by the electronic chip device (1213, 1215), and
- values of any first, second, third and/or fourth pixels corresponding to any of steps a, b, c and d not carried out by the electronic chip device,
wherein the output image data is formatted so that a camera (1212), a system (1210) or an external processing device (1211) configured for reducing a resolution of a digital colour image can readily distinguish between values of macro pixels and any values of first, second, third and/or fourth pixels in the output image data.

17. The electronic chip device (1213, 1215) according to claim 17, wherein the output image data is formatted in accordance with a predetermined format for exchange of data between the electronic chip device (1213, 1215) and anyone of a camera (1212), a system (1210) or an external processing device (1211).

## Patentansprüche

1. Verfahren zur Minderung einer Auflösung eines digitalen Farbbilds (100), wobei das digitale Farbbild Pixel (101) umfasst, die in einer Farbmaske (102) aus mindestens drei unterschiedlichen Farben angeordnet sind, wobei die Pixel erste Pixel (R), zweite Pixel (G), dritte Pixel (g) und vierte Pixel (B) umfassen, wobei das Verfahren umfasst:
- Aufzeichnen eines digitalen Farbbilds unter Verwendung der Farbmaske (102),
- Auswählen von nxn ersten Pixeln (R), die ein erstes Quadrat (SR) darstellen, und Verwenden der Werte dieser ausgewählten nxn Pixel zum Erzeugen eines Werts für ein erstes Makropixel (202, RR),
- Auswählen von nxn zweiten Pixeln (G), die ein zweites Quadrat (SG) darstellen, das im Verhältnis zu dem ersten Quadrat (SR) um 45 Grad gedreht und horizontal verschoben ist, und Verwenden der Werte dieser ausgewählten nxn Pixel zum Erzeugen eines Werts für ein zweites Makropixel (202, GG),
- Auswählen von nxn dritten Pixeln (g), die ein drittes Quadrat (Sg) darstellen, das im Verhältnis zu dem ersten Quadrat (SR) um 45 Grad gedreht und vertikal verschoben ist, und Verwenden der Werte dieser ausgewählten nxn Pixel zum Erzeugen eines Werts für ein drittes Makropixel (202, gg),
wobei jedes des ersten, zweiten und dritten Makropixels ein optisches Zentrum (201, CR, CG, Cg) aufweist, das durch die relative Position der Pixel bestimmt wird, die zum Erzeugen des Werts für das Makropixel (202) verwendet werden,
wobei die Pixel, die zum Erzeugen des Werts für das erste, zweite und dritte Makropixel verwendet werden, derart ausgewählt sind, dass das optische Zentrum (201) jedes des ersten, zweiten und dritten Makropixels (202) in identischen Positionen innerhalb jedes des ersten, zweiten und dritten Makropixels positioniert ist, sodass diese optischen Zentren ein einheitliches Gitter (WG) bilden, und
- Auswählen von M Pixeln aus nxn vierten Pixeln (B), die ein viertes Quadrat (SB) darstellen, das identisch zu dem ersten Quadrat (SR) ausgerichtet und diagonal hierzu verschoben ist, wobei M größer als Null und kleiner als oder gleich nxn ist, und Verwenden der Werte der M Pixel zum Erzeugen eines Werts für ein viertes Makropixel (202, BB).

2. Verfahren nach Anspruch 1, wobei die ausgewählten M Pixel und das resultierende optische Zentrum (CB, 201) um einen Abstand (D) im Verhältnis zu dem einheitlichen Gitter (WG) verschoben sind, wobei der Abstand (D) von sowohl M als auch den Positionen der M Pixel im Verhältnis zu dem vierten Quadrat (SB) derart abhängig ist, dass:
- wenn nxn eine ungerade ganze Zahl ist: M=nxn bedeutet, dass D=0, und
- wenn nxn eine gerade ganze Zahl ist: M=nxn bedeutet, dass D>0 und M<nxn bedeutet, dass D=0 und zwar für einige Werte von M.

3. Verfahren nach Anspruch 2, wobei der Abstand (D) von sowohl M als auch den Positionen der M Pixel im Verhältnis zu dem vierten Quadrat (SB) derart abhängig ist, dass:
- wenn nxn = 4: M=1 bedeutet, dass D=0 und M>1 bedeutet, dass D>0.

4. Verfahren nach Anspruch 2, wobei der Abstand (D) von sowohl M als auch den Positionen der M Pixel im Verhältnis zu dem vierten Quadrat (SB) derart abhängig ist, dass:
- wenn nxn = 16: M=1 und M=9 bedeutet, dass D=0.

5. Verfahren nach Anspruch 1, wobei das zweite Quadrat (SG) mit dem ersten Quadrat (SR) überlappt, das dritte Quadrat (Sg) mit dem ersten Quadrat (SR) überlappt und das vierte Quadrat (SB) mit einem oder mehreren des ersten, zweiten und dritten Quadrats überlappt.

6. Verfahren nach Anspruch 1, wobei nxn gleich vier und M gleich eins ist, wobei das Verfahren umfasst:
- Auswählen eines vierten Pixels (B) und Verwenden eines Werts des einen vierten Pixels zum Erzeugen eines Werts eines vierten Makropixels (BB), wobei das ausgewählte Pixel und das resultierende optische Zentrum (CB) einen Nullabstand (D) im Verhältnis zu dem einheitlichen Gitter (WG) aufweisen, wobei die drei übrigen vierten Pixel (B) vernachlässigt werden.

7. Verfahren nach Anspruch 1, wobei nxn gleich vier und M gleich vier ist, wobei das Verfahren umfasst:
- Auswählen von vier vierten Pixeln (B) und Verwenden eines Werts der vier vierten Pixel zum Erzeugen eines Werts des vierten Makropixels (BB), wobei die ausgewählten Pixel ein optisches Zentrum (CB) mit einem Abstand (D) im Verhältnis zu dem einheitlichen Gitter (WG) bereitstellen.

8. Verfahren nach Anspruch 1, wobei nxn gleich vier und M gleich drei ist, wobei das Verfahren umfasst:
- Auswählen eines vierten Pixels (B) mit einem Nullabstand (D) zu dem einheitlichen Gitter (WG), Auswählen von zwei vierten Pixeln (B), die dem ersten ausgewählten einen Pixel (B) am nächsten sind, und Verwenden der drei ausgewählten vierten Pixel (B) zum Erzeugen eines Werts für das vierte Makropixel (BB), wobei die ausgewählten Pixel ein optisches Zentrum (CB) mit einem kürzeren Abstand (D) im Verhältnis zu dem einheitlichen Gitter (WG) bereitstellen, wobei der eine übrige vierte Pixel (B) vernachlässigt wird.

9. Verfahren nach Anspruch 1 , wobei die Farbmaske eine Bayer-Maske ist, die ein rotes Pixel (R), zwei grüne Pixel (g, G) und ein blaues Pixel (B) umfasst.

10. Verfahren nach Anspruch 1, wobei das erste Pixel ein rotes Pixel (R), das zweite Pixel ein grünes Pixel (g), das dritte Pixel ein grünes Pixel (G) und das vierte Pixel ein blaues Pixel (B) ist.

11. Verfahren nach Anspruch 1, wobei die Werte der ausgewählten Pixel der jeweiligen ersten, zweiten, dritten und vierten Pixel (R, G, g, B) zum Erzeugen eines Werts des jeweiligen ersten, zweiten, dritten und vierten Makropixels (RR, GG, gg, BB) addiert werden.

12. Verfahren nach Anspruch 1, wobei die Werte der ausgewählten Pixel der jeweiligen ersten, zweiten, dritten und vierten Pixel (R, G, g, B) zum Erzeugen eines Werts des jeweiligen ersten, zweiten, dritten und vierten Makropixels (RR, GG, gg, BB) gemittelt werden.

13. System (1210), konfiguriert zur Minderung einer Auflösung eines digitalen Farbbilds (100), das Pixel (101) umfasst, die in einer Farbmaske (102) aus mindestens drei unterschiedlichen Farben angeordnet sind, wobei die Pixel erste Pixel (R), zweite Pixel (G), dritte Pixel (g) und vierte Pixel (B) umfassen, wobei das System Auswahlmittel (1220) umfasst zum
- Auswählen von nxn ersten Pixeln (R), die ein erstes Quadrat (SR) darstellen, und Verwenden der Werte dieser ausgewählten nxn Pixel zum Erzeugen eines Werts für ein erstes Makropixel (202, RR),
- Auswählen von nxn zweiten Pixeln (G), die ein zweites Quadrat (SG) darstellen, das im Verhältnis zu dem ersten Quadrat (SR) um 45 Grad gedreht und horizontal verschoben ist, und Verwenden der Werte dieser ausgewählten nxn Pixel zum Erzeugen eines Werts für ein zweites Makropixel (202, GG),
- Auswählen von nxn dritten Pixeln (g), die ein drittes Quadrat (Sg) darstellen, das im Verhältnis zu dem ersten Quadrat (SR) um 45 Grad gedreht und vertikal verschoben ist, und Verwenden der Werte dieser ausgewählten nxn Pixel zum Erzeugen eines Werts für ein drittes Makropixel (202, gg),
wobei jedes des ersten, zweiten und dritten Makropixels ein optisches Zentrum (201, CR, CG, Cg) aufweist, das durch die relative Position der Pixel bestimmt wird, die zum Erzeugen des Werts für das Makropixel (202) verwendet werden,
wobei die Pixel, die zum Erzeugen des Werts für das erste, zweite und dritte Makropixel verwendet werden, derart ausgewählt sind, dass das optische Zentrum (201) jedes des ersten, zweiten und dritten Makropixels (202) in identischen Positionen innerhalb jedes des ersten, zweiten und dritten Makropixels positioniert ist, sodass diese optischen Zentren ein einheitliches Gitter (WG) bilden, und wobei das System (1210) weiterhin Auswahlmittel (1220) umfasst zum
- Auswählen von M Pixeln von nxn vierten Pixeln (B), die ein viertes Quadrat (SB) darstellen, das identisch zu dem ersten Quadrat (SR) ausgerichtet und diagonal hierzu verschoben ist, wobei M größer als Null und kleiner als oder gleich nxn ist, und Verwenden der Werte der M Pixel zum Erzeugen eines Werts für ein viertes Makropixel (BB).

14. Computerprogrammprodukt, das die Auflösung eines mithilfe einer Farbmaske (102) aufgezeichneten digitalen Farbbilds (100) mindern kann, wobei das digitale Farbbild (100) Pixel (101) umfasst, die in einer Farbmaske (102) aus mindestens drei unterschiedlichen Farben angeordnet sind, wobei die Pixel erste Pixel (R), zweite Pixel (G), dritte Pixel (g) und vierte Pixel (B) umfassen, wobei das Computerprogrammprodukt zur Durchführung des Verfahrens nach Anspruch 1 oder Anspruch 9 konfiguriert ist.

15. Elektronische Chipvorrichtung (1213, 1215) zur Verwendung in einer Kamera (1212) oder einem System (1210), wobei die elektronische Chipvorrichtung zur Minderung einer Auflösung eines digitalen Farbbilds (100) konfiguriert ist, das Pixel (101) umfasst, die in einer Farbmaske (102) aus mindestens drei unterschiedlichen Farben angeordnet sind, wobei die Pixel erste Pixel (R), zweite Pixel (G), dritte Pixel (g) und vierte Pixel (B) umfassen, wobei die elektronische Chipvorrichtung Auswahlmittel (1220) umfasst, die zur Durchführung von mindestens einem der Schritte a, b, c und d konfiguriert sind,
- a) Auswählen von nxn ersten Pixeln (R), die ein erstes Quadrat (SR) darstellen, und Verwenden der Werte dieser ausgewählten nxn Pixel zum Erzeugen eines Werts für ein erstes Makropixel (202, RR),
- b) Auswählen von nxn zweiten Pixeln (G), die ein zweites Quadrat (SG) darstellen, das im Verhältnis zu dem ersten Quadrat (SR) um 45 Grad gedreht und horizontal verschoben ist, und Verwenden der Werte dieser ausgewählten nxn Pixel zum Erzeugen eines Werts für ein zweites Makropixel (202, GG),
- c) Auswählen von nxn dritten Pixeln (g), die ein drittes Quadrat (Sg) darstellen, das im Verhältnis zu dem ersten Quadrat (SR) um 45 Grad gedreht und vertikal verschoben ist, und Verwenden der Werte dieser ausgewählten nxn Pixel zum Erzeugen eines Werts für ein drittes Makropixel (202, gg),
- d) Auswählen von M Pixeln von nxn vierten Pixeln (B), die ein viertes Quadrat (SB) darstellen, das identisch zu dem ersten Quadrat (SR) ausgerichtet und diagonal hierzu verschoben ist, wobei M größer als Null und kleiner als oder gleich nxn ist, und Verwenden der Werte der M Pixel zum Erzeugen eines Werts für ein viertes Makropixel (202, BB),
wobei jedes des ersten, zweiten und dritten Makropixels ein optisches Zentrum (201, CR, CG, Cg) aufweist, das durch die relative Position der Pixel bestimmt wird, die zum Erzeugen des Werts für das Makropixel (202) verwendet werden, und
wobei die Pixel, die zum Erzeugen des Werts für das erste, zweite und dritte Makropixel verwendet werden, derart ausgewählt sind, dass das optische Zentrum (201) jedes des ersten, zweiten und dritten Makropixels (202) in identischen Positionen innerhalb jedes des ersten, zweiten und dritten Makropixels positioniert ist, sodass diese optischen Zentren ein einheitliches Gitter (WG) bilden.

16. Elektronische Chipvorrichtung (1213, 1215) nach Anspruch 15 zur Verwendung in einer Kamera (1212) oder einem System (1210) zur Bereitstellung jedes übrigen Schritts der Schritte a, b, c und d, der nicht von der elektronischen Chipvorrichtung (1213, 1215) durchgeführt wurde, wobei die elektronische Chipvorrichtung zur Bereitstellung von Ausgabebilddaten konfiguriert ist, umfassend
- Werte für Makropixels, die jedem der vom der elektronischen Chipvorrichtung (1213, 1215) durchgeführten Schritt a, b, c und d entsprechen, und
- Werte für jeden ersten, zweiten, dritten und/oder vierten Pixel, entsprechend einem der Schritte a, b, c und d, der nicht von der elektronischen Chipvorrichtung durchgeführt wurde,
wobei die Ausgabebilddaten derart formatiert sind, dass eine Kamera (1212), ein System (1210) oder eine externe Verarbeitungsvorrichtung (1211), die bzw. das zur Minderung einer Auflösung eines digitalen Farbbilds konfiguriert ist, problemlos zwischen Werten der Makropixel und einem Wert der ersten, zweiten, dritten und/oder vierten Pixel in den Ausgabebilddaten unterscheiden kann.

17. Elektronische Chipvorrichtung (1213, 1215) nach Anspruch 17, wobei die Ausgabebilddaten in Übereinstimmung mit einem vorbestimmten Format zum Austausch von Daten zwischen der Elektronische Chipvorrichtung (1213, 1215) und einer Kamera (1212), einem System (1210) oder einer externen Verarbeitungsvorrichtung (1211) formatiert ist.

## Revendications

1. Méthode permettant de réduire une résolution d'une image numérique couleur (100) où l'image numérique couleur comprend des pixels (101) disposés dans un masque couleur (102) d'au moins trois couleurs différentes, les pixels comprennent des premiers pixels (R), des deuxièmes pixels (G), des troisièmes pixels (g) et des quatrièmes pixels (B), la méthode comprenant :
- enregistrement d'une image numérique couleur en utilisant le masque couleur (102),
- sélection de nxn premiers pixels (R) formant un premier carré (SR), et utilisation de valeurs de ces nxn pixels sélectionnés pour générer une valeur d'un premier macropixel (202, RR),
- sélection de nxn deuxièmes pixels (G) formant un deuxième carré (SG) présentant une rotation de 45 degrés et un décalage horizontal par rapport au premier carré (SR), et utilisation de valeurs de ces nxn pixels sélectionnés pour générer une valeur d'un deuxième macropixel (202, GG),
- sélection de nxn troisièmes pixels (g) formant un troisième carré (Sg) présentant une rotation de 45 degrés et un décalage vertical par rapport au premier carré (SR), et utilisation de valeurs des nxn pixels pour générer une valeur d'un troisième macropixel (202,gg),
où chacun des premier, deuxième et troisième macropixels possède un centre optique (201, CR, CG, Cg) déterminé par les positions relatives des pixels utilisés pour générer la valeur du macropixel (202),
où les pixels utilisés pour générer des valeurs des premier, deuxième et troisième macropixels sont sélectionnés pour positionner les centres optiques (201) de chacun des premier, deuxième et troisième macropixels (202) à des positions identiques dans chacun des premier, deuxième et troisième macropixels, de manière à ce que ces centres optiques forment une grille uniforme (WG), et
- sélection de M pixels parmi nxn quatrièmes pixels (B) formant un quatrième carré (SB) présentant la même orientation et un décalage diagonal par rapport au premier carré (SR), M étant supérieur à zéro et inférieur ou égal à nxn, et utilisation de valeurs des M pixels pour générer une valeur d'un quatrième macropixel (202, BB).

2. Méthode selon la revendication 1, dans laquelle les M pixels sélectionnés et le centre optique ainsi obtenu (CB, 201) sont déplacés d'une distance (D) par rapport à la grille uniforme (WG), où la distance (D) dépend à la fois de M et des positions des M pixels par rapport au quatrième carré (SB) de manière à ce que :
- lorsque nxn est un entier impair : M=nxn entraîne D=0, et
- lorsque nxn est un entier pair : M=nxn entraîne D>0 et M<nxn entraîne D=0 pour certaines valeurs de M.

3. Méthode selon la revendication 2, dans laquelle la distance (D) dépend à la fois de M et des positions des M pixels par rapport au quatrième carré (SB) de manière à ce que :
- lorsque nxn = 4 : M=1 entraîne D=0 et M>1 entraîne D>0.

4. Méthode selon la revendication 2, dans laquelle la distance (D) dépend à la fois de M et des positions des M pixels par rapport au quatrième carré (SB) de manière à ce que :
- lorsque nxn = 16 : M=1 et M=9 entraîne D=0.

5. Méthode selon la revendication 1, dans laquelle le deuxième carré (SG) recouvre partiellement le premier carré (SR), le troisième carré (Sg) recouvre partiellement le premier carré (SR) et le quatrième carré (SB) recouvre partiellement un ou plusieurs des premier, deuxième et troisième carrés.

6. Méthode selon la revendication 1, dans laquelle nxn est égal à quatre et M est égal à un, la méthode comprenant ainsi :
- sélection d'un quatrième pixel (B) et utilisation d'une valeur de ce quatrième pixel pour générer une valeur d'un quatrième macropixel (BB), le pixel sélectionné et le centre optique ainsi obtenu (CB) étant situés à une distance (D) nulle de la grille uniforme (WG), les trois quatrièmes pixels restants (B) étant ignorés.

7. Méthode selon la revendication 1, dans laquelle nxn est égal à quatre et M est égal à quatre, la méthode comprenant ainsi :
- sélection de quatre quatrièmes pixels (B) et utilisation de valeurs des quatre quatrièmes pixels pour générer une valeur du quatrième macropixel (BB), les pixels sélectionnés donnant un centre optique (CB) situé à une distance (D) de la grille uniforme (WG).

8. Méthode selon la revendication 1, dans laquelle nxn est égal à quatre et M est égal à trois, la méthode comprenant ainsi :
- sélection d'un quatrième pixel (B) situé à une distance (D) nulle de la grille uniforme (WG), sélection de deux quatrièmes pixels (B) étant les plus proches du premier pixel (B) sélectionné et utilisation des trois quatrièmes pixels (B) sélectionnés pour générer une valeur du quatrième macropixel (BB), les pixels sélectionnés donnant un centre optique (CB) situé à une distance (D) réduite de la grille uniforme (WG), le quatrième pixel (B) restant étant ignoré.

9. Méthode selon la revendication 1, dans laquelle le masque couleur est un masque Bayer comprenant un pixel rouge (R), deux pixels verts (g, G) et un pixel bleu (B).

10. Méthode selon la revendication 1, dans laquelle le premier pixel est un pixel rouge (R), le deuxième pixel est un pixel vert (g), le troisième pixel est un pixel vert (G) et le quatrième pixel est un pixel bleu (B).

11. Méthode selon la revendication 1, dans laquelle les valeurs des pixels sélectionnés parmi les premiers, deuxièmes, troisièmes et quatrièmes pixels (R, G, g, B) respectifs sont additionnées afin de générer une valeur des premier, deuxième, troisième et quatrième macropixels (RR, GG, gg, BB) respectifs.

12. Méthode selon la revendication 1, dans laquelle on établit une moyenne des valeurs des pixels sélectionnés parmi les premiers, deuxièmes, troisièmes et quatrièmes pixels (R, G, g, B) respectifs afin de générer une valeur des premier, deuxième, troisième et quatrième macropixels (RR, GG, gg, BB) respectifs.

13. Système (1210) configuré pour réduire une résolution d'une image numérique couleur (100) comprenant des pixels (101) disposés dans un masque couleur (102) d'au moins trois couleurs différentes, les pixels comprenant des premiers pixels (R), des deuxièmes pixels (G), des troisièmes pixels (g) et des quatrièmes pixels (B), le système comprenant un moyen de sélection (1220) pour :
- sélectionner nxn premiers pixels (R) formant un premier carré (SR), et utiliser des valeurs de ces nxn pixels sélectionnés pour générer une valeur d'un premier macropixel (202, RR),
- sélectionner nxn deuxièmes pixels (G) formant un deuxième carré (SG) présentant une rotation de 45 degrés et un décalage horizontal par rapport au premier carré (SR), et utiliser des valeurs de ces nxn pixels sélectionnés pour générer une valeur d'un deuxième macropixel (202, GG),
- sélectionner nxn troisièmes pixels (g) formant un troisième carré (Sg) présentant une rotation de 45 degrés et un décalage vertical par rapport au premier carré (SR), et utiliser des valeurs des nxn pixels pour générer une valeur d'un troisième macropixel (202, gg),
où chacun des premier, deuxième et troisième macropixels possède un centre optique (201, CR, CG, Cg) déterminé par les positions relatives des pixels utilisés pour générer la valeur du macropixel (202),
où les pixels utilisés pour générer des valeurs des premier, deuxième et troisième macropixels sont sélectionnés pour positionner les centres optiques (201) de chacun des premier, deuxième et troisième macropixels (202) à des positions identiques dans chacun des premier, deuxième et troisième macropixels, de manière à ce que ces centres optiques forment une grille uniforme (WG), et ledit système (1210) comprenant également un moyen de sélection (1220) pour :
- sélectionner M pixels parmi nxn quatrièmes pixels (B) formant un quatrième carré (SB) présentant la même orientation et un décalage diagonal par rapport au premier carré (SR), M étant supérieur à zéro et inférieur ou égal à nxn, et utiliser des valeurs des M pixels pour générer une valeur d'un quatrième macropixel (BB).

14. Produit de type programme informatique capable de réduire une résolution d'une image numérique couleur (100) enregistrée en utilisant un masque couleur (102), où l'image numérique couleur (100) comprend des pixels (101) disposés dans le masque couleur d'au moins trois couleurs différentes, les pixels comprenant des premiers pixels (R), des deuxièmes pixels (G), des troisièmes pixels (g) et des quatrièmes pixels (B), ledit produit de type programme informatique étant configuré pour exécuter la méthode selon la revendication 1 ou la revendication 9.

15. Dispositif de type puce électronique (1213, 1215) destiné à être utilisé dans un appareil photo (1212) ou un système (1210), le dispositif de type puce électronique étant configuré pour réduire une résolution d'une image numérique couleur (100) comprenant des pixels (101) disposés dans un masque couleur d'au moins trois couleurs différentes, les pixels comprenant des premiers pixels (R), des deuxièmes pixels (G), des troisièmes pixels (g) et des quatrièmes pixels (B), le dispositif de type puce électronique comprenant un moyen de sélection (1220) configuré pour exécuter au moins une des étapes a, b, c et d :
- a) sélection de nxn premiers pixels (R) formant un premier carré (SR), et utilisation de valeurs de ces nxn pixels sélectionnés pour générer une valeur d'un premier macropixel (202, RR),
- b) sélection de nxn deuxièmes pixels (G) formant un deuxième carré (SG) présentant une rotation de 45 degrés et un décalage horizontal par rapport au premier carré (SR), et utilisation de valeurs de ces nxn pixels sélectionnés pour générer une valeur d'un deuxième macropixel (202, GG),
- c) sélection de nxn troisièmes pixels (g) formant un troisième carré (Sg) présentant une rotation de 45 degrés et un décalage vertical par rapport au premier carré (SR), et utilisation de valeurs des nxn pixels pour générer une valeur d'un troisième macropixel (202, gg),
- d) sélection de M pixels parmi nxn quatrièmes pixels (B) formant un quatrième carré (SB) présentant la même orientation et un décalage diagonal par rapport au premier carré (SR), M étant supérieur à zéro et inférieur ou égal à nxn, et utilisation de valeurs des M pixels pour générer une valeur d'un quatrième macropixel (202, BB),
où chacun des premier, deuxième et troisième macropixels possède un centre optique (201, CR, CG, Cg) déterminé par les positions relatives des pixels utilisés pour générer la valeur du macropixel (202), et
où les pixels utilisés pour générer des valeurs des premier, deuxième et troisième macropixels sont sélectionnées pour positionner les centres optiques (201) de chacun des premier, deuxième et troisième macropixels (202) à des positions identiques dans chacun des premier, deuxième et troisième macropixels, de manière à ce que ces centres optiques forment une grille uniforme (WG).

16. Le dispositif de type puce électronique (1213, 1215) selon la revendication 15, destiné à être utilisé dans un appareil photo (1212) ou un système (1210) assurant toute étape restante des étapes a, b, c et d non exécutée par le dispositif de type puce électronique (1213, 1215), le dispositif de type puce électronique étant configuré pour fournir des données d'image de sortie comprenant
- des valeurs de macropixels correspondant à l'une quelconque des étapes a, b, c et d exécutée par le dispositif de type puce électronique (1213, 1215), et
- des valeurs de tout premier, deuxième, troisième et/ou quatrième pixel correspondant à l'une quelconque des étapes a, b, c et d non exécutée par le dispositif de type puce électronique,
dans lequel les données d'image de sortie sont formatées de manière à ce qu'un appareil photo (1212), un système (1210) ou un dispositif de traitement externe (1211) configuré pour réduire une résolution d'une image numérique couleur puisse facilement faire la distinction entre des valeurs de macropixels et toute valeur de premier, deuxième, troisième/quatrième pixel dans les données d'image de sortie.

17. Le dispositif de type puce électronique (1213, 1215) selon la revendication 17, dans lequel les données d'image de sortie sont formatées selon un format prédéterminé pour l'échange de données entre le dispositif de type puce électronique (1213, 1215) et l'un quelconque d'un appareil photo (1212), un système (1210) ou un dispositif de traitement externe (1211).
